# DEMANDE DE BREVET EUROPEEN

(11) **EP 1 195 844 A1**
(43) Date de publication de la demande: **10.04.2002**
(21) Numéro de dépôt: 01402564.7
(22) Date de dépôt: 04.10.2001
(51) Int. Cl.: H01Q 1/24, H04B 1/38

(54) **Dispositif et procédé de contrôle et de commande de la puissance du signal d'un terminal de radiocommunications**

(30) Priorité: 09.10.2000 FR 0012875
(71) Demandeur: ALCATEL, 75008 Paris (FR)
(72) Inventeur: Greverie, Franck, 75009 Paris (FR); Muller, Jacques, 95280 Jouy Le Moutier (FR)
(74) Mandataire: Lamoureux, Bernard

(57) **Abrégé**

La présente invention concerne un dispositif de contrôle et de commande de la puissance des signaux émis/reçus par un terminal de radiocommunications comportant un circuit d'émission (1) et un circuit de réception (2) reliés à une antenne (7) d'émission/réception du terminal et définissant en fonctionnement respectivement un mode d'émission et un mode de réception, un circuit d'adaptation (8) des circuits d'émission et réception à l'antenne (7) agencé sur une partie commune de la liaison des circuits d'émission et de réception à l'antenne (7), caractérisé en ce que ledit dispositif comporte des moyens (9) de décentrage de l'adaptation en impédance de l'antenne (7) du terminal destinés à être activés lorsque le dispositif est en mode d'émission.

L'invention s'applique notamment aux terminaux de radiocommunications mobiles afin de limiter l'énergie reçue par son utilisateur.

## Description

La présente invention concerne le domaine des radiocommunications, notamment mobiles, telles que la radiotéléphonie, et plus particulièrement un dispositif ainsi qu'un procédé de contrôle et de commande de la puissance du signal d'un terminal de radiocommunications

Les terminaux de radiocommunications émettent, lors de leur fonctionnement, une certaine quantité d'énergie due aux radiations électromagnétiques produites par les antennes des terminaux lors de la communication avec les stations de base du réseau de télécommunications.

Lors de l'utilisation normale d'un terminal, c'est-à-dire lorsque le terminal se trouve dans une région voisine de la tête de son utilisateur et non déporté tel que c'est le cas avec l'emploi de casques connus sous le nom de " kits piéton ", l'utilisateur reçoit une certaine quantité d'énergie appelée SAR (de l'anglais Specific Absorption Rate). En outre, cette quantité d'énergie, ou densité de champ proche, est d'autant plus importante que le terminal fonctionne à poids de puissance maximum, c'est-à-dire à 33 dBm (ou 2 watts crête) selon la norme GSM.

Le SAR est directement proportionnel, pour un design donné du terminal, à l'efficacité de l'antenne et à la puissance émise. Or, l'efficacité de l'antenne ne peut pas trop être diminuée car cela nuirait aux performances du terminal, notamment en réception. Il est donc intéressant de jouer sur la puissance du terminal, tout en restant dans les limites fixées par la norme.

On connaît, notamment par le brevet EP 977 304, un appareil et un procédé pour contrôler la puissance émise dans certaines directions par un terminal comportant plusieurs antennes en activant ou désactivant sélectivement une ou plusieurs antennes.

Ce type d'appareil nécessite l'emploi de plusieurs antennes mono directionnelles ce qui induit un coût de fabrication important ainsi qu'une complexité de mise en oeuvre non négligeable.

De plus, le procédé correspondant comprend une étape de détection de présence humaine à proximité de l'appareil d'une fiabilité toute relative étant données les contraintes de fonctionnement du terminal.

D'autres procédés connus prévoient une limitation du rayonnement du terminal durant une période maximale afin de réduire le taux de radiations absorbées ou encore la désadaptation de l'antenne sur la bande d'émission.

Cependant, ces procédés connus nuisent à l'efficacité du terminal lors de son fonctionnement et la désadaptation d'une antenne, toujours selon les procédés connus, est irréversible. En effet, de telles désadaptations entachent les performances de l'antenne en réception.

Dans ce contexte, la présente invention pallie les inconvénients de l'art antérieur en proposant un dispositif ainsi qu'un procédé permettant de réduire de manière simple la quantité d'énergie reçue par l'utilisateur d'un terminal de radiocommunications lors de l'émission sans nuire à ses performances en réception.

A cette fin, selon l'invention, le dispositif de contrôle et de commande de la puissance des signaux émis/reçus par un terminal de radiocommunications comportant un circuit d'émission et un circuit de réception reliés à une antenne d'émission/réception du terminal et définissant en fonctionnement respectivement un mode d'émission et un mode de réception, un circuit d'adaptation des circuits d'émission et réception à l'antenne agencé sur une partie commune de la liaison des circuits d'émission et de réception à l'antenne, est caractérisé en ce qu'il comporte des moyens de décentrage de l'adaptation en impédance de l'antenne du terminal destinés à être activés lorsque le dispositif est en mode d'émission.

Selon une forme particulière de réalisation, le dispositif comporte en outre des moyens d'atténuation de puissance destinés à être activés lorsque le dispositif est en mode d'émission.

Avantageusement les moyens d'atténuation sont destinés à fonctionner que pour le poids de puissance maximum.

En outre, le dispositif comporte un contacteur apte à commander l'activation des moyens de décentrage de l'adaptation.

De préférence, les moyens de décentrage sont disposés entre le circuit d'adaptation et l'antenne du terminal.

L'invention concerne également un terminal de radiocommunications équipé d'un dispositif conforme à l'invention ainsi qu'un procédé de contrôle et de commande de la puissance des signaux émis/reçus par un terminal de radiocommunications comportant un circuit d'émission et un circuit de réception reliés à une antenne d'émission/réception du terminal et définissant en fonctionnement respectivement un mode d'émission et un mode de réception, un circuit d'adaptation des circuits d'émission et réception à l'antenne agencé sur une partie commune de la liaison des circuits d'émission et de réception à l'antenne, caractérisé en ce qu'il comporte une étape de décentrage de l'adaptation en impédance de l'antenne du terminal.

Selon une forme de réalisation, le décentrage de l'adaptation en impédance de l'antenne est réalisé entre le circuit d'adaptation et l'antenne du terminal, uniquement en mode émission et sur le poids de puissance maximum.

L'invention sera mieux comprise à la lumière de la description qui suit se rapportant à un exemple de réalisation illustratif mais en aucun cas limitatif, en référence aux dessins annexés dans lesquels :
- La figure 1 est une représentation schématique et partielle des circuits d'émission et de réception d'un terminal de radiocommunications selon l'art antérieur ;
- La figure 2 est une représentation schématique du dispositif selon l'invention dans sa configuration d'émission ;
- La figure 3 est une représentation schématique du dispositif selon l'invention dans sa configuration de réception.

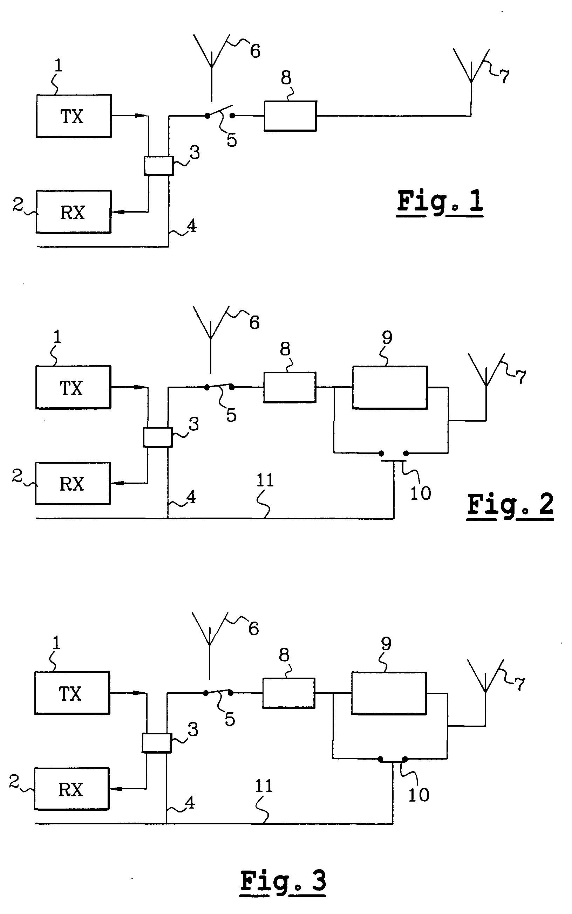

La figure 1 représente partiellement et de façon schématique les circuits d'émission et de réception d'un terminal de radiocommunications fonctionnant selon l'art antérieur.

Ledit terminal de radiocommunications comporte des circuits d'émission 1 et de réception 2, non détaillés sur les figures 1, 2 et 3 et connus de l'art antérieur.

Lesdits circuits d'émission 1 et de réception 2 sont reliés ensemble à un circuit d'aiguillage 3. Ce circuit d'aiguillage 3, connu en lui-même et relié à la carte radio numérique (connue en elle-même et non représentée) du terminal de radiocommunications par une connexion 4, permet de router les signaux en différenciant les voies montantes et descendantes.

Le circuit d'aiguillage 3 est relié en outre à un contacteur mécanique 5 apte à permettre la connexion des circuits d'émission 1 et de réception 2 à soit une antenne extérieure 6 telle qu'une antenne de toit d'un véhicule, soit l'antenne 7 du terminal de radiocommunications.

Il est à noter que l'antenne 7 du terminal de radiocommunications peut être soit une antenne dipôle (antenne quart d'onde), soit une antenne de type " patch ", ou tout autre type d'antenne.

Entre le connecteur mécanique 5 et l'antenne 7 du terminal de radiocommunications est interposé un circuit d'adaptation 8 apte à réaliser, de manière connue, l'adaptation (ou « matching ») en impédance de l'antenne du terminal 7. En effet, une antenne de terminal de radiocommunications présente des termes réactifs que le circuit de matching permet d'éliminer en réalisant une adaptation de la dite antenne à l'impédance de source.
La figure 2 représente schématiquement le dispositif selon l'invention, apte à mettre en oeuvre le procédé selon l'invention.

Les éléments de la figure 2 communs à ceux de la figure 1 sont désignés par les mêmes références. Le connecteur mécanique 5 est configuré de manière à ce que l'antenne du terminal 7 soit active, l'antenne extérieure 6 étant déconnectée ou absente.

Sur la partie de circuit commune aux circuits d'émission 1 et de réception 2, en aval du connecteur mécanique 5, sont interposés en série des moyens de décentrage de l'adaptation en impédance de l'antenne 7 du terminal.

Le décentrage de l'adaptation en impédance de l'antenne 7 du terminal est effectuée sur la ligne commune empruntée par les voies montantes et descendantes en sortie (dans le sens montant) du circuit d'aiguillage 3 différenciant émission et réception.

Selon une forme particulière de réalisation, les moyens de décentrage sont interposés en série entre le circuit d'adaptation 8 et l'antenne du terminal 7.

En outre, un interrupteur 10 est monté en parallèle sur les moyens 9 de décentrage de l'adaptation en impédance de l'antenne 7 du terminal, ledit interrupteur 10 étant relié à la carte radio numérique (évoquée précédemment et non représentée) par une connexion 11.

L'interrupteur 10, commandé par la carte radio numérique, est ainsi apte à connaître deux positions, l'une fermant le circuit monté en parallèle sur les moyens 9, l'autre ouvrant ledit circuit, et ce selon les informations reçues de la carte radio numérique.

Selon une forme particulière de réalisation, le dispositif comporte des moyens d'atténuation sous la forme d'un atténuateur permettant d'introduire des pertes volontaires dans le signal véhiculé par le dispositif. Comme nous l'avons vu, le SAR dépendant, pour un design de terminal donné, de la puissance émise ainsi que de l'efficacité de l'antenne, une atténuation du signal conduit à une réduction du SAR.

Il existe, entre autres, deux possibilités de réaliser l'atténuateur :
- une solution dite " fixe " possédant une structure en Pi ou en T ;
- une solution dite " variable ", comportant un transistor FET monté en résistance variable.

Les moyens 9 de décentrage de l'adaptation en impédance de l'antenne 7 du terminal peuvent être constitués de moyens aptes à centrer l'adaptation de l'antenne du terminal 7 afin d'optimiser son efficacité.

En effet, le recentrage de la fréquence de résonance de l'antenne du terminal 7 au milieu de l'inter bande émission/réception permet de dégrader l'efficacité de l'antenne du terminal 7 en émission sans pour autant affecter l'efficacité de ladite antenne en réception.

Les moyens aptes à centrer l'adaptation de l'antenne du terminal 7 sont, par exemple, constitués d'un circuit d'adaptation (ou " matching ") possédant une structure en Pi ou en T avec une commutation d'un élément réactif à l'aide d'une diode PIN.
Quelle que soit la solution retenue, le dispositif selon l'invention peut être configuré de manière à limiter la modification du signal afin que ce dernier reste toujours au niveau des valeurs fixées par les recommandations des normes.

Dans la forme de réalisation de la figure 2, le dispositif selon l'invention est représenté durant une phase d'émission.

L'interrupteur 10 étant ouvert, les moyens 9 de décentrage de l'adaptation en impédance de l'antenne 7 du terminal sont passants et le signal émis par le terminal traverse donc le circuit d'adaptation 8 puis les moyens 9 avant d'aboutir à l'antenne du terminal 7.

Les moyens 9 de décentrage de l'adaptation en impédance de l'antenne 7 du terminal vont ainsi assurer la meilleure adéquation entre l'efficacité nécessaire à la transmission du signal à travers l'antenne du terminal 7 et la densité de champ proche émise.

Le dispositif peut avantageusement être configuré afin que lesdits moyens 9 de décentrage de l'adaptation ne soient actifs que lorsque le terminal fonctionne à puissance maximum (ou poids de puissance maximum, 33 dBm selon la norme GSM), où le SAR est maximum.

La figure 3 représente schématiquement le dispositif selon l'invention lors d'une phase de réception.

La carte radio numérique (connue en elle-même et non représentée) commande, à travers la liaison 11, l'interrupteur 10 afin que celui-ci ferme le circuit monté en parallèle sur les moyens 9 de décentrage de l'adaptation en impédance de l'antenne 7.
Ainsi, le signal reçu par l'antenne du terminal 7 emprunte la portion de circuit comportant l'interrupteur 10 sans traverser les moyens 9. Le signal reçu n'est donc aucunement modifié et aboutit au circuit de réception 2 en passant par le circuit d'aiguillage 3.

Le dispositif selon l'invention, et notamment les moyens 9 de décentrage de l'adaptation en impédance de l'antenne 7, peuvent être configurés à volonté, notamment en ce qui concerne leur seuil de déclenchement.

Le dispositif selon l'invention, en jouant sur la puissance émise, permet ainsi de réduire le SAR lors de l'émission d'un signal par le terminal de radiocommunications, sans pour autant affecter l'efficacité en réception de l'antenne 7 du terminal.

Selon une forme ultérieure de réalisation non décrite, le dispositif comporte des moyens d'atténuation et des moyens de décentrage selon l'invention afin de dégrader l'émission du signal.

## Revendications

1. Dispositif de contrôle et de commande de la puissance des signaux émis/reçus par un terminal de radiocommunications comportant un circuit d'émission (1) et un circuit de réception (2) reliés à une antenne (7) d'émission/réception du terminal et définissant en fonctionnement respectivement un mode d'émission et un mode de réception, un circuit d'adaptation (8) des circuits d'émission et réception à l'antenne (7) agencé sur une partie commune de la liaison des circuits d'émission et de réception à l'antenne (7), **caractérisé en ce que** ledit dispositif comporte des moyens (9) de décentrage de l'adaptation en impédance de l'antenne (7) du terminal destinés à être activés uniquement lorsque le dispositif est en mode d'émission.

2. Dispositif selon la revendication 1, **caractérisé en ce qu'**il comporte en outre des moyens d'atténuation de puissance destinés à être activés lorsque le dispositif est en mode d'émission.

3. Dispositif selon la revendication 2, **caractérisé en ce que** les moyens d'atténuation sont destinés à fonctionner que pour le poids de puissance maximum.

4. Dispositif selon l'une des revendications 1 à 3, **caractérisé en ce qu'**il comporte un contacteur (10) apte à commander l'activation des moyens de décentrage de l'adaptation (9).

5. Dispositif selon l'une des revendications 1 à 2, **caractérisé en ce que** les moyens de décentrage sont disposés entre le circuit d'adaptation (8) et l'antenne (7) du terminal.

6. Terminal de radiocommunications, **caractérisé en ce qu'**il comporte un dispositif de contrôle et de commande conforme à l'une des revendications 1 à 5.

7. Procédé de contrôle et de commande de la puissance des signaux émis/reçus par un terminal de radiocommunications comportant un circuit d'émission (1) et un circuit de réception (2) reliés à une antenne (7) d'émission/réception du terminal et définissant en fonctionnement respectivement un mode d'émission et un mode de réception, un circuit d'adaptation (8) des circuits d'émission et réception à l'antenne (7) agencé sur une partie commune de la liaison des circuits d'émission et de réception à l'antenne (7), **caractérisé en ce que** ledit procédé comporte une étape de décentrage de l'adaptation en impédance de l'antenne (7) du terminal opérée uniquement en mode d'émission.

8. Procédé selon la revendication 7, **caractérisé en ce que** le décentrage de l'adaptation en impédance de l'antenne (7) est réalisé entre le circuit d'adaptation (8) et l'antenne (7) du terminal.

9. Procédé selon l'une des revendications 7 à 8, **caractérisé en ce que** le décentrage de l'adaptation en impédance de l'antenne (7) est opéré uniquement sur le poids de puissance maximum de fonctionnement du terminal.
